# EUROPÄISCHE PATENTSCHRIFT

(11) **EP 3 307 604 B1**
(45) Veröffentlichungstag und Bekanntmachung des Hinweises auf die Patenterteilung: **22.05.2019**
(21) Anmeldenummer: 16728280.5
(22) Anmeldetag: 03.06.2016
(51) Int. Cl.: B62D 5/00

(54) **FEEDBACK-AKTUATOR EINER LENKEINRICHTUNG**
FEEDBACK ACTUATOR OF A STEERING DEVICE
ACTIONNEUR À RÉTROACTION D'UN DISPOSITIF DE DIRECTION

(30) Priorität: 09.06.2015 DE 102015210528
(43) Veröffentlichungstag der Anmeldung: 18.04.2018
(73) Patentinhaber: ThyssenKrupp Presta AG, 9492 Eschen (LI); thyssenkrupp AG, 45143 Essen (DE)
(72) Erfinder: FRICKE, Sascha, 6971 Hard (AT); KIRMSZE, Helmut, 9494 Schaan (LI)
(74) Vertreter: thyssenkrupp Intellectual Property GmbH
(86) Internationale Anmeldenummer: PCT/EP2016/062614
(87) Internationale Veröffentlichungsnummer: WO 2016/198328

(56) Entgegenhaltungen:
- EP-A1- 2 610 130
- DE-A1-102009 018 047

## Beschreibung

### Stand der Technik

Die Erfindung betrifft einen Feedback-Aktuator für eine Lenkeinrichtung, umfassend eine Lenkwelle, die um ihre Längsachse drehbar relativ zu einer Führungseinrichtung gelagert ist und die über einen Gewindetrieb mit einem Übertragungselement gekoppelt ist, welches an der Führungseinrichtung relativ zur Drehung der Lenkwelle feststehend angebracht ist und durch Drehung der Lenkwelle axial bezüglich der Längsachse translatorisch bewegbar ist, wobei das Übertragungselement in axialer Richtung zwischen zwei an der Führungseinrichtung abgestützten axialen Widerlagern angeordnet ist und zwischen dem Übertragungselement und den Widerlagern jeweils ein Federelement angeordnet ist.

Steer-by-wire-Lenksysteme für Kraftfahrzeuge nehmen manuelle Lenkbefehle des Fahrers wie gewohnt durch Drehung eines Lenkrades entgegen. Das Lenkrad bewirkt die Drehung einer Lenkwelle, die jedoch nicht mechanisch über das Lenkgetriebe mit den zu lenkenden Rädern verbunden ist, sondern über Drehwinkel- bzw. Drehmomentsensoren den eingebrachten Lenkbefehl erfasst und ein daraus bestimmtes elektrisches Steuersignal an einen Lenksteller abgibt, der mittels eines elektrischen Stellantriebs einen entsprechenden Lenkeinschlag der Räder einstellt.

Bei steer-by-wire-Systemen erhält der Fahrer von den gelenkten Rädern keine unmittelbare mechanische Rückmeldung über den Lenkstrang, welche bei konventionellen mechanisch gekoppelten Lenkungen als Reaktions- bzw. Rückstellmoment in Abhängigkeit von der Fahrbahnbeschaffenheit, der Fahrzeuggeschwindigkeit, dem aktuellen Lenkwinkel und weiterer Betriebszustände zum Lenkrad zurückgemeldet werden. Die fehlende haptische Rückmeldung erschwert dem Fahrer, aktuelle Fahrsituationen sicher zu erfassen und angemessene Lenkmanöver durchzuführen, wodurch die Fahrzeuglenkbarkeit und damit die Fahrsicherheit verringert werden.

Zur Erzeugung eines realistischen Fahrgefühls ist es im Stand der Technik bekannt, aus einer tatsächlichen momentanen Fahrsituation Parameter wie Fahrzeuggeschwindigkeit, Lenkwinkel, Lenkungs-Reaktionsmoment und dergleichen zu erfassen oder in einer Simulation zu berechnen, und aus diesen ein Rückkopplungs-Signal zu bilden, welches in einen Feedback-Aktuator eingespeist wird. Der Feedback-Aktuator weist einen Lenkradsteller auf, der abhängig vom Rückkopplungs-Signal ein dem realen Reaktionsmoment entsprechendes Rückstellmoment (Feedbackmoment) in die Lenkwelle einkoppelt. Derartige "Force-feedback"-Systeme geben dem Fahrer den Eindruck einer realen Fahrsituation wie bei einer konventionellen Lenkung, was eine intuitive Reaktion erleichtert.

Aus der EP 2 610 130 B1 ist eine Lenkeinrichtung bekannt, die eine Feedback-Aktuator mit den eingangs genannten Merkmalen aufweist. Diese sieht vor, den Drehwinkel der Lenkwelle über einen Lenkwinkelsensor zu erfassen und den Messwert als Eingangssignal eines Lenkstellers zu nutzen. Die Drehbewegung der Lenkwelle wird über einen Gewindetrieb in eine Axialbewegung eines als Mutter ausgebildeten Übertragungselements umgesetzt. Bei einer Störung des Lenkwinkelsensors werden Federelemente freigegeben, die in axialer Richtung zwischen dem Übertragungselement und an der Führungseinrichtung angebrachten axialen Widerlagern eingesetzt sind. Dadurch wird der Betätigungsweg zwischen der Mutter und an den Widerlagern angeordneten Richtungssensoren verringert, mit denen eine schrittweise Lenkwinkeleingabe erfolgen kann. Ein Reaktionsmoment wird bei dieser bekannten Lenkeinrichtung mittels eines Rotationsdämpfers erzeugt, der einen mit der Lenkwelle verbundenen Rotor aufweist, der mit einem Stator an der Führungseinrichtung in Reibkontakt steht. Der Feedback-Aktuator ist zwar einfach aufgebaut, eine an die Fahrsituation angepasste Einstellung des Reaktionsmoments erfolgt jedoch nicht.

Aus der DE 199 12 169 A1 ist ein steer-by-wire-Lenksystem bekannt, mit einem als Elektromotor ausgeführten Lenkradsteller. Der Lenkradsteller kann in Abhängigkeit von Messwerten, welche die jeweilige Fahrsituation charakterisieren, ein Drehmoment als Handmoment in die Lenkwelle einkoppeln. Der Vorteil dieses bekannten Lenksystems ist, dass ein an die tatsächliche Fahrsituation angepasstes Reaktionsmoment am Lenkrad erzeugt werden kann und dadurch eine realistische Rückmeldung an den Fahrer erfolgen kann. Nachteilig ist jedoch, dass es sich um ein komplexes elektronisches System handelt, welches einen elektrischen Lenkradsteller erfordert und entsprechend aufwendig ist. Insbesondere muss ein in das Lenkrad eingekoppeltes Reaktionsmoment durch einen elektrischen Aktuator erzeugt und aufrechterhalten werden.

Angesichts der vorangehend erläuterten Problematik ist es eine Aufgabe der vorliegenden Erfindung, einen einfach aufgebauten Feedback-Aktuator für eine Lenkeinrichtung zur Verfügung zu stellen, der eine Einstellung des an der Lenkwelle anliegenden Reaktionsmoments ermöglicht.

### Darstellung der Erfindung

Zur Lösung der vorgenannten Problematik wird erfindungsgemäß vorgeschlagen, dass jedes der beiden Federelemente mit dem Übertragungselement und einem der Widerlager verbunden ist.

In einem erfindungsgemäßen Lenksystem wird wie im zugrunde gelegten Stand der Technik eine Drehung der Lenkwelle durch manuelle Betätigung des daran angebrachten Lenkrads umgesetzt in eine translatorische Verschiebung des Übertragungselements entlang der Längsachse. Dabei ist das Übertragungselement gemäß der Erfindung über zwei Federelemente im Unterschied zur eingangs erwähnten EP 2 610 130 B1 in jedem möglichen Betriebszustand, d.h. bei jedem einstellbaren Lenkwinkel, über die Federelemente elastisch an beide axiale Widerlager angekoppelt. Beispielsweise ist das Übertragungselement in der Mittelstellung, welche der Geradeausstellung der gelenkten Räder entspricht und gleichbedeutend als neutrale Stellung oder Ruhestellung bezeichnet wird, gleich weit von den beiden Widerlagern entfernt. In dieser Position ist das Übertragungselement über die beiden Federelemente elastisch mit beiden Widerlagern verbunden, so dass eine Bewegung aus der Mittelstellung heraus zu einer Verkürzung des einen und einer Verlängerung des anderen Federelements führt. In den Extrempositionen bei einem maximalen Lenkeinschlag in eine Richtung ist das Übertragungselement in axialer Richtung maximal an das eine Widerlager angenähert, wobei das dort eingesetzte Federelement entsprechend maximal verkürzt ist, und relativ zum jeweils anderen Widerlager maximal entfernt, wobei das dort eingesetzte Federelement maximal ausgedehnt ist. In diesen Stellungen hat das Übertragungselement ebenfalls zu jedem Zeitpunkt eine elastische Verbindung zu beiden Widerlagern.

Ein Reaktionsmoment, welches einem über das Lenkrad in die Lenkwelle eingebrachtes Lenkmoment entgegenwirkt, wird gemäß der Erfindung durch die Federelemente erzeugt. In der neutralen Mittelstellung wirkt wie vorangehend erläutert in Summe zunächst keine Kraft auf das Übertragungselement. Bei einer Auslenkung üben die vom Übertragungselement relativ zu den Widerlagern zusammengedrückten und auseinandergezogenen Federelemente als Reaktion eine Federkraft parallel zur Längsachse auf das Übertragungselement aus, welche das Übertragungselement in Richtung auf die Mittelstellung zurückdrängt. Dadurch, dass der Gewindetrieb bevorzugt nichtselbsthemmend ausgebildet ist, beispielsweise als Trapez- oder Flachgewinde außerhalb der Selbsthemmung oder als Kugelgewindetrieb, wird die axiale Federkraft über das Übertragungselement als Drehmoment in die Gewindespindel des Gewindetriebs und damit der Lenkwelle eingebracht, welches als Reaktionsmoment dem eingebrachten Lenkmoment entgegenwirkt. Das Reaktionsmoment ist hinsichtlich Betrag und Richtung abhängig vom eingebrachten Lenkmoment, und wird vom Fahrer am Lenkrad als realitätsnaher Lenkwiderstand wahrgenommen.

Vorzugsweise werden als Federelemente mechanische Federn eingesetzt, beispielsweise Schraubenfedern, Tellerfedern oder Gasdruckfedern, welche hinsichtlich der geforderten Abmessungen und elastischen Eigenschaften in weiten Grenzen konfigurierbar sind, und bei geringen Kosten eine zuverlässige Funktion gewährleisten. Dabei haben Schraubenfedern und vergleichbare zylindrische Bauformen den Vorteil, dass sie koaxial zum Gewindetrieb montiert werden können. Mit Tellerfedern in Tellerfederpaketen können degressive Federkennlinien dargestellt werden. Insbesondere erfordern mechanische Federelemente zur Ausübung ihrer Funktion keine Energieversorgung wie beispielsweise elektrische Stellantriebe. Dadurch ist zum einen eine sichere Funktion gewährleistet, falls die elektrische Stromversorgung ausfällt oder ein Defekt in einer elektronischen Steuerung auftritt. Zum anderen ist zur Erzeugung eines Reaktionsmoments kein elektrischer Strom erforderlich, was der Energie- und Umweltbilanz eines Fahrzeugs zugutekommt.

Es ist grundsätzlich denkbar und möglich, die Federelemente sowohl als Druckfedern als auch als Zugfedern auszubilden. Wesentlich ist, dass jedes der Federelemente für jeden möglichen Lenkwinkel und entsprechend in jeder auftretenden Stellung des Übertragungselements elastischen Kontakt zum Übertragungselement und dem jeweiligen Widerlager hat. Bedingt durch die Einbausituation ist die Verwendung von Druckfedern vorteilhaft, die sich jeweils gegen das Übertragungselement und eines der Widerlager abstützen können, so dass keine zusätzlichen Befestigungsmittel erforderlich sind.

Die beiden Federelemente sind bezüglich ihrer elastischen Eigenschaften bevorzugt identisch ausgebildet, d.h. weisen dieselbe Länge und Federkonstante (Federcharakteristik) auf. Dadurch wird ein symmetrischer Aufbau realisiert, bei dem auf das Übertragungselement von den Federelementen aus entgegengesetzten axialen Richtungen in Mittelstellung derselbe Betrag der Federkraft ausgeübt wird, wodurch Kräftegleichgewicht herrscht und in Summe keine Kraft auf das Übertragungselement wirkt. Dadurch kann eine Selbstzentrierung des Übertragungselements in der Neutralstellung, der sogenannten Geradeauslaufposition, erreicht werden.

Der Gewindetrieb kann dadurch realisiert sein, dass auf der Lenkwelle ein Gewindeabschnitt ausgebildet ist, und das Übertragungselement eine auf den Gewindeabschnitt aufgeschraubte Mutter umfasst. Dadurch wird eine besonders kompakte Bauweise ermöglicht, insbesondere kann eine Linearführung, welche das Übertragungselement parallel zur Längsachse führt und es relativ zur Drehung der Lenkwelle fixiert, entlang der Längserstreckung benachbart zur Lenkwelle in der Führungseinrichtung realisiert werden. Die Führungseinrichtung kann beispielsweise ein in Richtung der Längsachse langgestrecktes Gehäuse umfassen, das im Wesentlichen rohr- oder kastenförmig ausgebildet sein kann, und in dem die Lenkwelle gelagert ist. Auf mindestens einer der Lenkwelle zugewandten Seite kann an dem Gehäuse ein Formschlusselement angeordnet sein, welches das auf der Lenkwelle angebrachte Übertragungselement im Querschnitt zumindest teilweise formschlüssig umgreift, so dass das Übertragungselement in Längsrichtung in oder an dem Formschlusselement entlanggleiten kann, eine Drehung des Übertragungselements relativ zur Führungseinrichtung jedoch nicht möglich ist. Das Formschlusselement kann beispielsweise ein schienen- oder stangenförmiges Führungsprofil umfassen, welche durch eine axiale Führungsöffnung in dem Übertragungselement verläuft. Alternativ kann das Übertragungselement einen Querschnitt haben, der bezüglich einer Drehung um die Längsachse formschlüssig in einen korrespondierenden Innenquerschnitt des Gehäuses einsetzbar ist, und der beispielsweise vieleckig oder sternförmig ausgebildet sein kann. In einer vorteilhaften Weiterbildung ist auf dem Formschlusselement ein Endanschlagkörper zwischen dem Übertragungselement und dem Widerlager angeordnet. Dieser Endanschlagkörper dient dabei als Begrenzung der translatorischen Bewegung des Übertragungselements und/oder des Widerlagers. Bevorzugt ist der Endanschlagkörper als Hülse ausgebildet, die auf dem Formschlusselement fixiert ist. Bevorzugt ist die Hülse mit dem Formschlusselement in verstemmt, verlötet oder verklebt.

Es kann vorteilhaft sein, dass die Federelemente eine nichtlineare Federcharakteristik haben. Dabei zeigt die Federkennlinie der Federelemente nicht eine proportionale Abhängigkeit zwischen Auslenkung und Federkraft gemäß dem Hooke'schen Gesetz, sondern beispielsweise einen degressiven oder progressiven Anstieg der Federkraft mit der Auslenkung. Dadurch ist es möglich, beispielsweise ein lenkwinkelabhängig unter- oder überproportional ansteigendes Rückstellmoment in der Lenkwelle zu erzeugen. Eine nichtlineare Federcharakteristik kann durch eine spezielle Form einer Feder erreicht werden, die beispielsweise als Schraubenfeder mit veränderlichem Windungsabstand ausgebildet ist. Eine herkömmliche Feder kann außerhalb ihres linearen Verformungsbereichs ebenfalls nichtlinear genutzt werden. Ebenfalls ist es denkbar und möglich, mehrere Federn so in Reihe und parallel zu schalten, dass eine definierte nicht lineare Federcharakteristik vorhanden ist.

Eine Ausführung der Erfindung sieht vor, dass beide Federelemente zwischen dem Übertragungselement und den Widerlagern in Mittelstellung unter axialer Federvorspannung stehen. In der Mittelstellung haben beide Federelemente dieselbe Ausdehnung parallel zur Längsachse, und üben bei identischen Federeigenschaften aus entgegengesetzten Richtungen denselben Betrag der Federkraft auf das Übertragungselement aus. Durch die Vorspannung ist dieser Betrag in Mittelstellung jeweils größer als Null. Dadurch ist die Summe der Federkräfte in Mittelstellung nach wie vor Null. Insbesondere beim Einsatz von Federelementen mit nichtlinearer Federcharakteristik ist bei einer axialen Verlagerung die auf das Übertragungselement als Rückstellkraft wirkende Gesamt-Federkraft beider Federelemente jedoch umso größer sein, je größer der Betrag der Vorspannkraft ist.

Dadurch ergibt sich grundsätzlich die Möglichkeit, durch eine Veränderung der Vorspannkraft den lenkwinkelabhängigen Verlauf des durch die Federelemente erzeugten Rückstellmoments gezielt zu beeinflussen. Eine derartige Funktionalität kann dadurch erreicht werden, dass zumindest ein Widerlager mit einer Verstelleinrichtung verbunden ist und relativ zur Führungseinrichtung axial verstellbar ist. Die Verstelleinrichtung weist bevorzugt einen linearen motorischen Stellantrieb oder Aktuator auf, der sich mit einem festen Ende an der Führungseinrichtung abstützt und mit einem relativ dazu parallel zur Längsachse bewegbaren Ende mit einem Widerlager verbunden ist. Beispielsweise kann ein motorisch antreibbarer Spindeltrieb eingesetzt werden, der eine Verschiebung eines Widerlagers in Richtung hin zum oder weg vom Übertragungselement ermöglicht. Dadurch kann die auf das Übertragungselement ausgeübte Vorspannkraft eingestellt werden. Bei einer nichtlinearen Federcharakteristik ist die Rückstellkraft und damit das Rückstellmoment für denselben Lenkeinschlag abhängig von der eingestellten Vorspannkraft und kann gemäß der Fahrsituation gezielt beeinflusst werden. Weiterhin ist es möglich, die Vorspannkraft entsprechend dem Wunsch des Fahrers (Fahrerprofil) anzupassen, beispielsweise um ein sportlicheres oder komfortableres Rückstellen in die Neutralstellung zu erreichen. So bietet sich die Möglichkeit, dass System einfach auf unterschiedliche regionaler Gepflogenheiten zu konfigurieren, beispielsweise für unterschiedliche Märkte.

Insbesondere beim Einsatz von Federelementen mit nichtlinearer Federcharakteristik oder dem Betrieb von Federelementen außerhalb ihrer linearen Kennlinie kann es vorteilhaft sein, dass beide Widerlager von der Verstelleinrichtung synchron antiparallel zueinander axial bewegbar sind. Durch die Synchronisierung der Bewegung bewegen sich die Widerlager bei Betätigung der Verstelleinrichtung aufeinander zu oder voneinander weg, d.h. sie werden spiegelsymmetrisch bezüglich der Mittelstellung bewegt, so dass bei identisch ausgebildeten Federelementen das Übertragungselement im Kraftgleichgewicht in der Mittelstellung gehalten wird. Entsprechend werden beide Federelemente in gleichem Maße stärker oder schwächer zwischen dem Übertragungselement und den Widerlagern vorgespannt. Wie vorangehend erläutert worden ist, wird durch die nichtlineare Kennlinie durch eine Veränderung der Vorspannung das lenkwinkelabhängig in die Lenkwelle eingekoppelte Rückstellmoment verändert werden. Dadurch ist es möglich, den Lenkwiderstand, d.h. das vom Fahrer zum Einschlagen der Lenkung erforderliche Handmoment, gezielt zu erhöhen oder zu verringern, um beispielsweise eine Anpassung des Rückstellmoments an die momentane Fahrzeuggeschwindigkeit oder die Beschaffenheit der Fahrbahn vorzunehmen.

Eine erfindungsgemäße Verstelleinrichtung kann durch an sich bekannte Stellantriebe mit geringem Aufwand verwirklicht werden. Es kann beispielsweise ein herkömmlicher Spindeltrieb eingesetzt werden, der für diese Anwendung bevorzugt selbsthemmend ausgebildet ist. Mittels des Spindeltriebs kann die relative Position des oder der Widerlager relativ zur Führungseinrichtung eingestellt werden, wobei lediglich für die Verstellung Antriebsenergie aufgewendet werden muss, beispielsweise als elektrischer Strom für einen elektrischen Stellantrieb. In einem eingestellten Zustand benötigt die Verstelleinrichtung keine Energie, durch die Selbsthemmung des Antriebs verbleiben die Widerlager in ihrer aktuellen Stellung. Dies wirkt sich positiv auf die Energiebilanz eines Kraftfahrzeugs aus.

Eine synchronisierte Bewegung der Widerlager relativ zueinander lässt sich ebenfalls unproblematisch realisieren, beispielsweise durch zwei gleichartig aufgebaute, drehmomentschlüssig miteinander gekuppelte Gewindetriebe mit gegenläufigen Gewinden.

In einer Ausführungsform kann die Verstelleinrichtung ein rohrförmiges Stellgehäuse umfassen, welches relativ zur Führungseinrichtung um die Längsachse drehbar gelagert ist und ein Innengewinde aufweist, in welches mindestens ein Widerlager mit einem Außengewinde eingeschraubt ist. Das Stellgehäuse bildet zusammen mit einem Widerlager einen Spindeltrieb, bei dem eine Drehung des Stellgehäuses relativ zur Führungseinrichtung in einen Translation des relativ zur Führungseinrichtung bezüglich Verdrehung fixierten Widerlagers umgesetzt wird. Die Lenkwelle kann zusammen mit dem Übertragungselement und den Federelementen innerhalb des Stellgehäuses untergebracht sein, wodurch eine besonders kompakte Bauform erreicht werden kann. Um eine synchrone Bewegung der Widerlager gegeneinander zu bewirken, kann das Stellgehäuse zwei Innengewindeabschnitte mit gegenläufigen Gewinden haben, d.h. mit Rechtsgewinde bzw. Linksgewinde, und die beiden Widerlager korrespondierende gegenläufige Außengewinde. Dabei sorgt eine Drehung des Stellgehäuses in eine Drehrichtung dafür, dass sich das Widerlager in dem Abschnitt mit Rechtsgewinde axial in eine Längsrichtung bewegt, und das andere Widerlager in dem Abschnitt mit Linksgewinde in die entgegengesetzte Längsrichtung. Generell ist es möglich, die Gewinde ein- oder mehrgängig auszubilden. Ebenfalls ist es denkbar und möglich, einen Kugelgewindetrieb einzusetzten. Dadurch kann das Umlenkspiel, welches bei der Drehrichtungsumkehr auftritt, gegenüber herkömmlichen Gewinden reduziert werden.

Die Führungseinrichtung kann ein Mantelgehäuse umfassen, in dem die Lenkwelle drehbar gelagert ist. Eine Linearführung für das Übertragungselement kann auf der Innenwand des Mantelgehäuses angeordnet sein, die der Lenkwelle zugewandt ist. Ein rohrförmiges Stellgehäuse einer Verstelleinrichtung kann ebenfalls in dem Mantelgehäuse untergebracht sein. Das Mantelgehäuse kann geschlossen ausgebildet sein, um den erfindungsgemäßen Feedback-Aktuator gegen schädliche Umgebungseinflüsse wie Verunreinigungen und dergleichen zu schützen. Darüber hinaus besteht die Möglichkeit, das Gehäuse mit einer Dämpfungs- und/oder Schmierflüssigkeit zu füllen, um eine mechanische Dämpfung gezielt einzustellen und Verschleiß zu minimieren. Als Dämpfungsflüssigkeit kann beispielsweise Silikonöl eingesetzt werden, welches aufgrund seiner relativ hohen Viskosität für eine geschmeidige und ruckfreie Bewegung des Übertragungselements mit den Federelementen und der Lenkwelle sorgt, wodurch ein realistisches und als angenehm empfundenes Lenkgefühl erzeugt wird.

Eine Ausführungsform der Erfindung sieht vor, dass die Lenkwelle mit einem Rotor einer Dämpfungseinrichtung gekoppelt ist, die einen an der Führungseinrichtung abgestützten Stator aufweist, wobei zwischen Rotor und Stator ein Dämpfungsmoment einkoppelbar ist, welches einem in die Lenkwelle eingeleiteten Lenkmoment entgegengesetzt ist. Die Dämpfungseinrichtung bildet einen Rotationsdämpfer für die Lenkwelle, der eine eingegebene Lenkbewegung abbremst. Dadurch wird einer Drehung des Lenkrads ein Widerstand entgegengesetzt, der die Reibung in einem realen Lenksystem nachbildet.

Eine Dämpfungseinrichtung kann vorsehen, dass der Rotor und der Stator einander zugewandte Reibelemente aufweisen, die in Reibschluss bringbar sind. Werden die Reibelemente reibschlüssig miteinander verbunden, wirkt zwischen ihnen eine Reibkraft, die einer relativen Bewegung entgegengesetzt ist, diese folglich dämpft bzw. bremst. Dadurch, dass die Reibflächen auf axialen und/oder radialen Umfangsflächen von Rotor und Stator angeordnet sind, kann ein Brems- oder Reaktionsmoment erzeugt werden, welches einem in die Lenkwelle eingeleiteten Lenkmoment entgegengesetzt ist, und somit die Reibung in einem realen Lenksystem simuliert. Die Dämpfungswirkung kann dadurch realisiert werden, dass zwischen gegeneinander beweglichen Reibflächen ein viskoses Dämpfungsfluid angeordnet ist, beispielsweise hochviskoses Silikonöl oder -fett, welches durch interne und Grenzflächen-Reibung für eine hydraulische Dämpfung sorgt. Die Dämpfungswirkung ist im Wesentlichen abhängig von der Viskosität des Dämpfungsfluids, der Oberflächenstruktur der Reibflächen, der Spaltbreite zwischen den Reibflächen und dem gegenüberliegenden Flächenbereich der Reibflächen. Derartige hydraulische Rotationsdämpfer sind zuverlässig und wartungsarm und erzeugen eine gleichmäßige und ruckfreie Dämpfungswirkung, wodurch ein angenehmes Lenkgefühl erzeugt wird. Alternativ ist es möglich, die Dämpfungswirkung durch mechanischen Kontakt zwischen den Reibflächen zu erzeugen, wobei Gleitreibung auftritt. Die Größe der Reibungskraft, welche die Brems- bzw. Dämpfungswirkung bestimmt, ist dabei im Wesentlichen abhängig von den Materialien und der Oberflächenstruktur der Reibflächen sowie der Andruckkraft, mit der die Reibflächen gegeneinander angedrückt werden.

Die Dämpfungswirkung ist bei hydraulischen und mechanischen Rotationsdämpfern im Wesentlichen unabhängig vom Lenkwinkel, und erfordert keine externe Energieversorgung, was ein Vorteil gegenüber aktiven Systemen mit elektrischen Stellantrieben, elektromagnetischen Bremsen und dergleichen ist.

Besonders vorteilhaft ist die Kombination einer derartigen Dämpfungseinrichtung mit einem erfindungsgemäßen Feedback-Aktuator mit Federelementen, wodurch für einen Fahrer in einem steer-by-wire-Lenksystem unterschiedliche Fahrsituationen energieeffizient, sicher und realitätsnah dargestellt werden können.

In einer vorteilhaften Weiterbildung der Erfindung weist die Dämpfungseinrichtung eine Einstelleinrichtung zur Einstellung des Dämpfungsmoments auf. Dadurch ist die Dämpfungswirkung einstellbar, so dass in Abhängigkeit von einer realen Fahrsituation oder vorgegebenen Simulationsparametern das auf die Lenkwelle rückwirkende Bremsmoment größer oder kleiner vorgegeben werden kann. Die Einstellung ermöglicht beispielsweise die Darstellung einer erhöhten Reibung zwischen den Rädern und der Fahrbahnoberfläche, und/oder geschwindigkeitsabhängig auftretenden Gegenkräften.

Die Einstelleinrichtung kann einen Stellantrieb aufweisen, der mit dem Rotor oder dem Stator zusammenwirkt zur relativen Positionierung und/oder Einstellung einer vorgegebenen Andruckkraft. Mittels des Stellantriebs kann durch die Positionierung der Reibelemente relativ zueinander bei einer hydraulischen Dämpfungseinrichtung der Abstand und/oder die gegenüberliegende Fläche verändert werden, um die Dämpfung zu vergrößern - durch eine Verringerung des Abstands und/oder Vergrößerung der aktiven Fläche - oder zu verkleinern - durch eine Vergrößerung des Abstands und/oder Verkleinerung der aktiven Fläche. Bei einer Dämpfungseinrichtung mit mechanisch reibschlüssig gegeneinander anliegenden Reibelementen kann durch den Stellantrieb eine erhöhte Andruckkraft auf die Reibflächen ausgeübt werden, um die Dämpfungswirkung zu erhöhen, und entsprechend die Andruckkraft für eine schwächere Dämpfung gelöst werden.

Eine zusätzliche Funktionalität kann dadurch erreicht werden, dass ein Stellantrieb einer Störgrößen-Simulationseinrichtung mit der Lenkwelle koppelbar ist. Der Stellantrieb kann beispielsweise einen Stellmotor umfassen, der über ein Getriebe ein Stellmoment auf die Lenkwelle ausüben kann. Dadurch können dem durch die Federelemente erzeugten, lenkwinkelabhängigen Rückstellmoment, und gegebenenfalls einem von einer Dämpfungseinrichtung erzeugten, lenkwinkelunabhängigen Dämpfungsmoment ein zusätzliches Drehmoment als Störmoment überlagert werden. Das Störmoment kann beispielsweise durch Fahrbahnunebenheiten hervorgerufene Vibrationen oder Auslenkungen der gelenkten Räder über die Lenkwelle an das Lenkrad zurückmelden, abhängig von realen Messwerten in einer steer-by-wire-Lenkung. Es ist weiterhin möglich, Störmomente als Vibration oder Ruckeln in die Lenksäule einzukoppeln, um dem Fahrer über das Lenkrad ein haptisches Signal zu vermitteln, beispielsweise zur Warnung, wenn von einem Sensor erfasst wird, dass eine Fahrbahnbegrenzung oder -markierung überfahren worden ist, sich ein Hindernis im Fahrweg befindet, über den Verkehrsfunk eine Warnmeldung erfolgt, eine Übermüdung des Fahrers festgestellt wird oder dergleichen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische Darstellung eines steer-by-wire-Lenksystems,
- Figur 2: einen erfindungsgemäßen Feedback-Aktuator in einer ersten Ausführungsform im Längsschnitt,
- Figur 3: einen erfindungsgemäßen Feedback-Aktuator in einer zweiten Ausführungsform im Längsschnitt,
- Figur 4: einen erfindungsgemäßen Feedback-Aktuator in einer dritten Ausführungsform im Längsschnitt,
- Figur 5: einen erfindungsgemäßen Feedback-Aktuator in einer vierten Ausführungsform im Längsschnitt,
- Figur 6: eine Detailansicht eines abgewandelten Feedback-Aktuators gemäß Figur 5,
- Figur 7: einen erfindungsgemäßen Feedback-Aktuator in einer fünften Ausführungsform im Längsschnitt, sowie
- Figur 8: einen erfindungsgemäßen Feedback-Aktuator in einer sechsten Ausführungsform im Längsschnitt.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

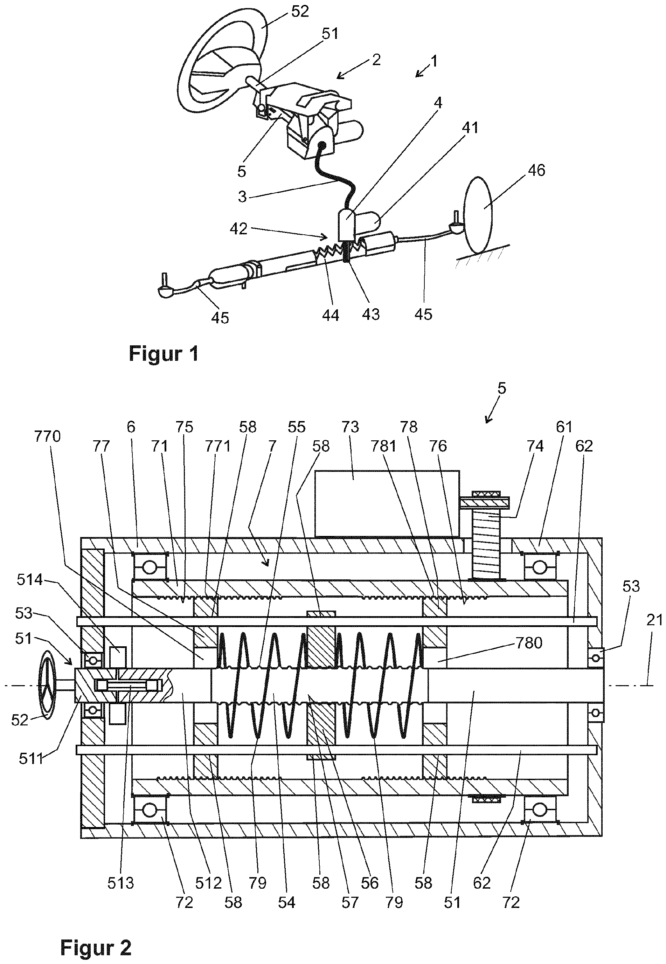

Figur 1 zeigt schematisch ein steer-by-wire-Lenksystem 1, welches eine Eingabeeinheit 2 umfasst, die über eine elektrische Leitung 3 mit einem elektrischen Lenkungsantrieb 4 verbunden ist.

Die Eingabeeinheit 2 weist einen Feedback-Aktuator 5 auf mit einer Lenkwelle 51, an deren bezogen auf die Fahrtrichtung hinteren Ende ein Lenkrad 52 angebracht ist.

Der Lenkungsantrieb 4 umfasst einen mit der elektrischen Leitung 3 verbundenen Stellmotor 41, der ein Lenkungs-Stellmoment in ein Lenkgetriebe 42 einleitet. Dort wird das Lenkungs-Stellmoment über ein Ritzel 43 und eine Zahnstange 44 in eine Translationsbewegung von Spurstangen 45 umgesetzt, wodurch ein Lenkeinschlag der gelenkten Räder 46 bewirkt wird.

Der erfindungsgemäße Feedback-Aktuator 5 ist in verschiedenen Ausführungsformen in den Figuren 1, 2, 3, 4, 5, 7 und 8 dargestellt in einem schematischen Längsschnitt entlang der Längsachse 21 der Lenkwelle 51.

Der Feedback-Aktuator 5 weist eine Führungseinrichtung 6 auf, die ein Mantelgehäuse 61 und Führungsprofile 62 umfasst. Das Mantelgehäuse 61 ist rohrförmig koaxial zur Längsachse 21 ausgebildet. Die Führungsprofile 62 können stangenförmig ausgebildet sein und sind in dem Durchgangsquerschnitt des Mantelgehäuses 61 angebracht, wo sie sich parallel mit Abstand zur Längsachse 21 erstrecken. In der dargestellten Ausführungsform sind zwei Führungsprofile 62, die um 180° versetzt angeordnet sind, bereitgestellt. Grundsätzlich ist es ebenfalls denkbar und möglich, lediglich ein einziges Führungsprofil 62 bereitzustellen. Bevorzugt sind jedoch drei Führungsprofile 62 bereitgestellt.

Die Lenkwelle 51 weist eine Eingangswelle 511 und eine Ausgangswelle 512 auf, welche über einen Drehstab 513 miteinander verbunden sind. Für einen über das Lenkrad 52 eingegebenen Lenkbefehl können der eingegebene Lenkwinkel und gegebenenfalls das Lenkmoment von einem Sensor 514, der als Winkelsensor oder kombinierter Winkel-Drehmomentsensor ausgebildet sein kann, erfasst und als elektronisches Messsignal zur Weiterverarbeitung an eine nicht dargestellte Steuereinrichtung weitergeleitet werden.

In Lagern 53, bevorzugt Wälzlagern, ist die Lenkwelle 51 in dem Mantelgehäuse 61 drehbar relativ zur Führungseinrichtung 6 gelagert.

Die Lenkwelle 51 weist einen Gewindeabschnitt 54 mit einem Außengewinde 55 auf. Ein Übertragungselement 56, welches im Wesentlichen scheibenförmig gestaltet ist, ist mit einem Innengewinde 57 auf den Gewindeabschnitt 54 aufgeschraubt, so dass der Gewindeabschnitt 54 zusammen mit dem Übertragungselement 56 einen Gewindetrieb bildet. Die Führungsprofile 62 sind durch axiale Durchgangsöffnungen 58 in dem Übertragungselement 56 hindurchgeführt, wobei sie eine lineare Gleitführung für das Übertragungselement 56 in Richtung der Längsachse 21 bilden. Dabei bilden sie einen Formschluss bezüglich einer Drehung um die Längsachse 21, so dass das Überragungselement 56 an der Führungseinrichtung 6 drehfest angebracht ist. Folglich wird eine Drehung der Lenkwelle 51 umgesetzt in eine translatorische Verschiebung des Übertragungselements 56 parallel zur Längsachse 21.

Koaxial zur Lenkwelle 51 ist eine Verstelleinrichtung 7 ausgebildet, welche ein rohrförmiges Stellgehäuse 71 aufweist, das das Übertragungselement 56 und die Führungsprofile 62 umschließt. Das Stellgehäuse 71 ist in Lagern 72, bevorzugt Wälzlagern, koaxial in dem Mantelgehäuse 61 um die Längsachse 21 drehbar gelagert. Eine Drehbewegung des Stellgehäuses71 relativ zum Mantelgehäuse 61 kann bewirkt werden durch einen Stellantrieb 73, bevorzugt einen elektrischen Stellmotor wie einen Servomotor oder dergleichen, der an der Verstelleinrichtung 7 angeordnet ist. Die Motorwelle des Stellantriebs 73 ist über ein mechanisches Übertragungsglied 74, hier einen Zahnriemen, zur Übertragung der Drehbewegung mit dem Stellgehäuse 71 gekoppelt. Dafür weist die Rotorwelle des Stellantriebs 73 ein Zahnriemenrad auf, ebenso wie auf dem Stellgehäuse 71 eine entsprechende Verzahnung ausgebildet ist, um mit dem hier dargestellten Zahnriemen 74 in Wirkeingriff zu treten.

Auf der inneren Mantelfläche des Stellgehäuses 71 sind mit axialem Abstand zwei Innengewindeabschnitte, nämlich ein erster Innengewindeabschnitt 75 und ein zweiter Innengewindeabschnitt 76 ausgebildet, die gegenläufig orientierte Gewinde haben. Beispielsweise hat der erste Innengewindeabschnitt 75 Rechtsgewinde und der zweite Innengewindeabschnitt 76 Linksgewinde, wobei das Rechtsgewinde und das Linksgewinde als eingängiges Trapezgewinde mit einer identischen Gewindesteigung ausgebildet sind.

In den ersten Innengewindeabschnitt 75 ist ein erstes Widerlager 77 mit einem als Rechtsgewinde ausgebildeten Außengewinde, und im Wesentlichen gleichartig in den zweiten Innengewindeabschnitt 76 ist ein zweites Widerlager 78 mit einem als Linksgewinde ausgebildeten Außengewinde. Die Widerlager haben im Wesentlichen die Form zylindrischer Scheiben mit zentralen Öffnungen 770 bzw. 780, durch welche die Lenkwelle 51 mit radialem Abstand hindurchgeführt ist. Die Führungsprofile 61 und 62 sind durch die Durchgangsöffnungen 58 hindurchgeführt, die im Prinzip ausgebildet sind wie im Übertragungselement 56, auf denen die Widerlager 77 und 78 in Längsrichtung parallel zur Längsachse 21 sich translatorisch entlang bewegen können, gegenüber einer Verdrehung des Stellgehäuses 71 jedoch am Mantelgehäuse 61 festgelegt sind.

Zwischen dem Übertragungselement 56 und einem Widerlager 77 und 78 ist jeweils ein Federelement 79 angeordnet. In der dargestellten Ausführung sind die beiden Federelemente 79 als koaxial auf der Lenkwelle 51 angeordnete Schraubenfedern ausgebildet, vorzugsweise mit einer nichtlinearen Kennlinie, bzw. im nichtlinearen Kennlinienbereich betrieben. Erfindungsgemäß ist jedes der beiden Federelemente 79 mit dem Übertragungselement 56 und jedem der Widerlager 77 und 78 verbunden. Damit ist insbesondere gemeint, dass in der dargestellten Mittelstellung, in der sich das Übertragungselement 56 axial in der Mitte zwischen den Widerlagern 77 und 78 befindet, die Federelemente 79 jeweils das Übertragungselement 56 und eines der Widerlager 77 und 78 kontaktieren. Wird aus dieser Mittelstellung, die der Geradeausstellung der gelenkten Räder 46 entspricht, die Lenkwelle 51 durch Betätigung des Lenkrads 52 verdreht, wird das Übertragungselement 56 auf dem Außengewinde 55 des Gewindeabschnitts 54 parallel zur Längsachse 21 translatorisch bewegt, und zwar abhängig von der Drehrichtung des Lenkeinschlags axial in Richtung auf das eine Widerlager 77 oder das andere Widerlager 78 zu. Dabei wird jeweils eines der Federelemente 79 komprimiert und übt auf das Übertragungselement 56 eine Gegenkraft aus, die der durch den Lenkeinschlag verursachten Axialbewegung des Übertragungselements 56 entgegengesetzt ist. Dadurch, dass der aus den Gewinden 55 und 57 gebildete Gewindetrieb nichtselbsthemmend ausgebildet ist, beispielsweise als Trapezgewinde im nichtselbsthemmenden Bereich oder als Kugelgewindetrieb, wird das Übertragungselement 56 durch die Gegenkraft in Richtung in die dargestellte Mittenstellung belastet, so dass eine dem eingegebenen Lenkmoment entgegengesetztes Rückstell- bzw. Reaktionsmoment am Lenkrad 52 ansteht. Das Rückstellmoment ist umso größer, je größer der Lenkeinschlag ist und entsprechend das Übertragungselement 56 weiter aus der Mittelstellung bewegt ist, wobei ein Federelement 79 stärker komprimiert wird. Wenn kein Lenkmoment mehr auf das Lenkrad 52 ausgeübt wird, das heißt das Lenkrad 52 losgelassen wird, wird die Lenkwelle 51 durch das von dem Federelement 79 ausgeübte Rückstellmoment wieder in die Mittenstellung zurückgedreht, wie dies bei einer realen Fahrsituation der Fall ist.

Durch Betätigung des Stellantriebs 73 kann das Stellgehäuse 71 relativ zu den Widerlagern 77 und 78 verdreht werden. Durch die gegensinnigen Gewindetriebe, die aus den Innengewinden 75 und 76 sowie den Außengewinden 771 und 781 gebildet werden, werden die Widerlager 77 und 78 je nach Drehrichtung des Stellantriebs 73 synchron in Axialrichtung aufeinander zu oder voneinander weg bewegt. Folglich werden die Federelemente 79 zwischen dem Übertragungselement 56 und den Widerlagern 77 und 78 stärker komprimiert, d.h. vorgespannt, oder entspannt. Unter Zugrundelegung einer nichtlinearen Federkennlinie, beispielsweise durch eine explizit nichtlinear wirkende Bauform oder den Betrieb außerhalb des linearen Betriebsbereichs, ergibt sich eine vom Komprimierungsgrad der Federelemente 79 abhängiger Betrag der Rückstellkraft. Damit ist das auf die Lenkwelle 51 ausgeübte, lenkwinkelabhängige Reaktions- bzw. Rückstellmoment einstellbar, beispielsweise abhängig von der realen Fahrzeuggeschwindigkeit in einem steer-by-wire-Lenksystem.

In einer Weiterbildung umfasst der Feedback-Aktuator 5 für eine Lenkeinrichtung 1 eine Dämpfungseinrichtung 8. Diese ist koaxial zur Längsachse 21 ausgebildet und weist einen mit der Lenkwelle 51 mit einem gekoppelten Rotor 81 auf sowie einen an der Führungseinrichtung 6 abgestützten Stator 82. Der Stator 82 ist in etwa becherförmig ausgebildet mit einer kegelstumpfförmigen Reibfläche 83. Der Rotor 81 ist dazu in Form und Abmessungen korrespondierend ausgebildet, mit einer der Reibfläche 83 zugewandten, ebenfalls konischen bzw. kegelstumpfförmigen Reibfläche 84, so dass zwischen den Reibflächen 83 und 84 ein kegelmantelförmiger Spalt 85 gebildet wird. Stator 82 und Rotor 83 sind in einem geschlossenen Gehäuse 86 angeordnet, welches mit einem Dämpfungsfluid gefüllt sein kann, beispielsweise einem höherviskosen Silikonöl oder dergleichen. Insbesondere der Spalt 85 ist mit dem Dämpfungsfluid gefüllt.

Der Stator 82 ist an Führungselementen 860 parallel zur Längachse 21 axial verschiebbar in dem Gehäuse 86 gelagert. Von einem Stellmotor 87 kann über einen Zahnriemen 88 oder dergleichen eine im Gehäuse 86 in Axialrichtung fixierte, drehbar gelagerte Stellmutter 89 drehend angetrieben werden. Die Stellmutter 89 ist mit ihrem Innengewinde 891 auf ein Außengewinde 821 des Stators 82 aufgeschraubt, so dass ein Gewindetrieb gebildet wird. Durch den Gewindetrieb wird eine Drehung der Stellmutter 89 durch den Stellmotor 87 in eine axiale Verschiebung des Stator 82 umgesetzt.

Durch eine axiale Verschiebung in Richtung gegen den Rotor 81 bzw. vom Rotor 81 weg kann die Breite des Spalts 85 verkleinert bzw. vergrößert werden. Der wirkenden Reibungskraft aufgrund der Fluidreibung zwischen Rotor 83 und Stator 82 bei einer relativen Drehung der Lenkwelle 51 kann auf diese Weise eingestellt werden. Dadurch kann eine lenkwinkelunabhängige Dämpfung vorgegeben werden, um Reibung im Lenksystem und zwischen gelenkten Rädern und Fahrbahnoberfläche zu simulieren.

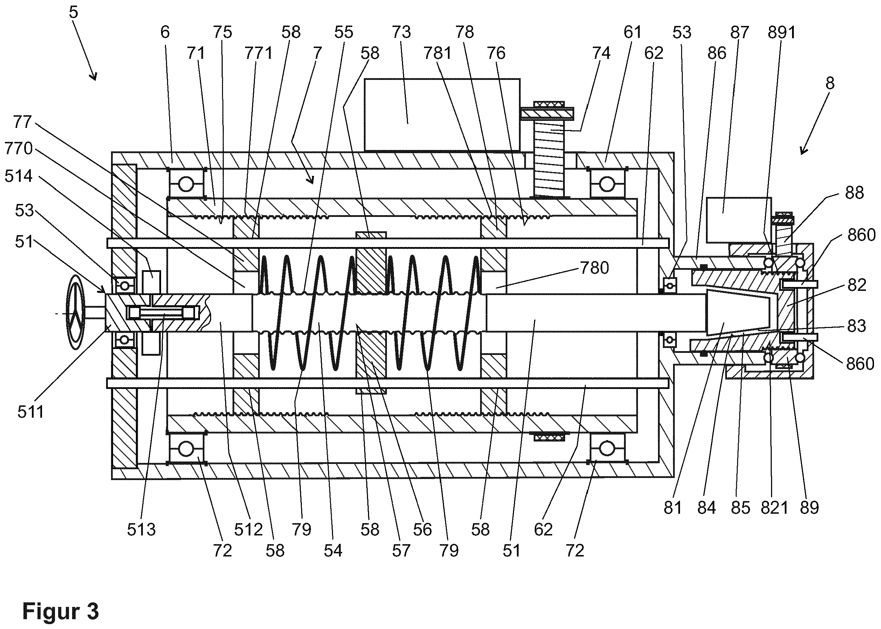

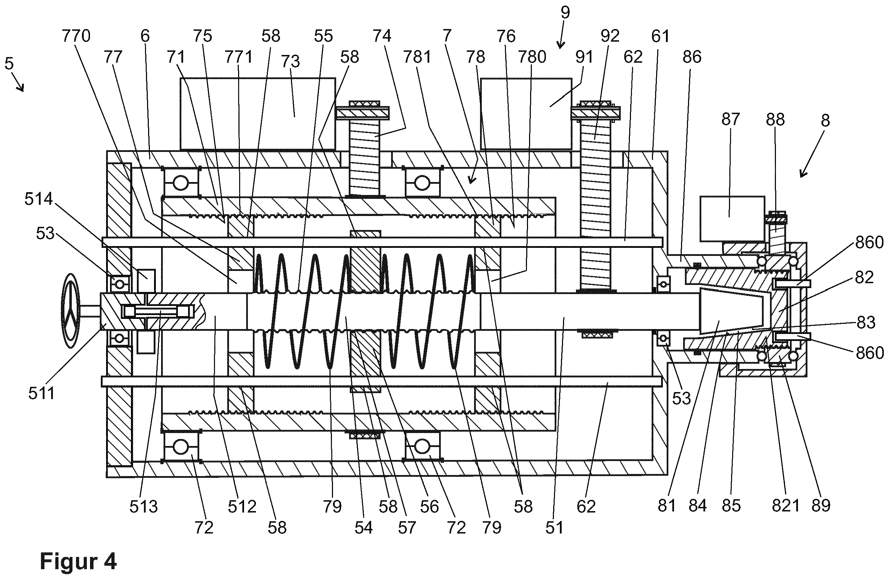

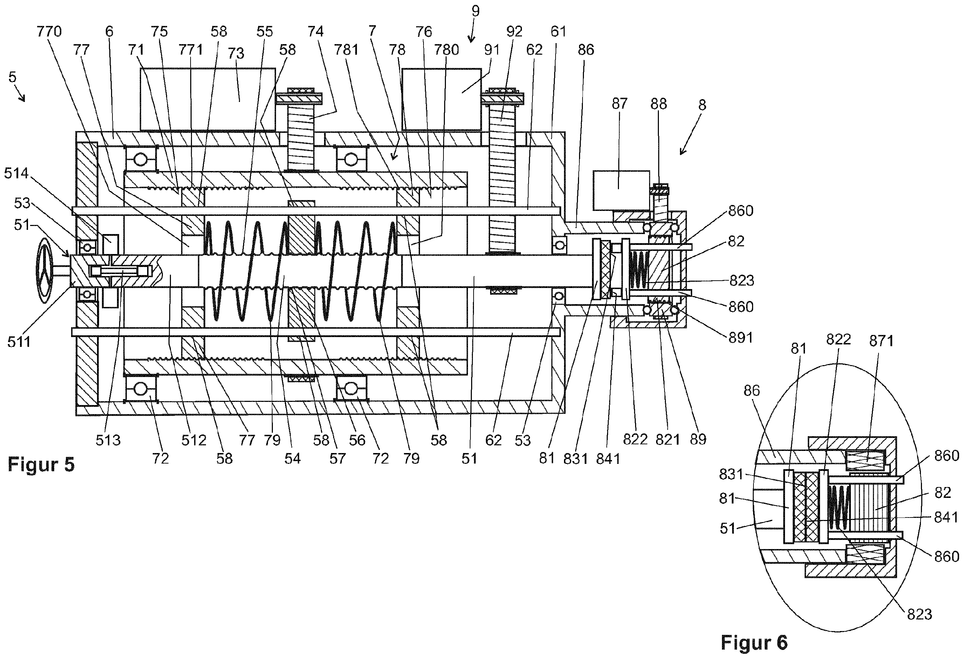

Alternative Ausführungsformen einer Dämpfungseinrichtung 8 sind in den Figuren 5 und 6 dargestellt. In Figur 5 weist ein scheibenförmig ausgebildeter Rotor 81 eine stirnseitige, axiale Reibfläche 831 auf, gegen die eine ebenfalls stirnseitige, axiale Reibfläche 841 eines Stators 82 andrückbar ist. Hierzu ist ein Gewindetrieb ähnlich dem in Figur 3 und 4 dargestellten gebildet, mit dem der Stator 82 parallel zur Längsachse 21 bewegt werden kann. Die genannte Reibfläche 841 ist auf einer Andruckplatte 822 ausgebildet, welche sich in axialer Richtung mittels eines Federelements 823 an dem Stator 82 abstützt. Das Federelement 823 sorgt dafür, dass die Reibflächen 831 und 841 mit der Federkraft im Reibschluss gegeneinander angepresst werden. Durch Verstellung des Stators 82 kann in dieser Ausführungsform die Andruckkraft variiert werden, wodurch entsprechend die Reibungskraft und damit die lenkwinkelunabhängige Dämpfung bezogen auf die jeweilige Fahrsituation vorgegeben werden kann. Die Reibfläche 831 umfasst bevorzugt ein Hartgewebe oder einen Elastomerwerkstoff, beispielsweise Pertinax oder Kautschuk.

Figur 6 zeigt eine Ausführung ähnlich der gemäß Figur 5, bei dem die Andruckkraft durch einen elektromagnetischen Linear-Aktuator erzeugt wird, bei dem der Stator 82 als Magnetanker innerhalb einer koaxialen Magnetspule 871 angeordnet ist. Bei einer Bestromung der Magnetspule 871 wird der Stator 82 axial gegen den Rotor 81 bewegt, wobei über das Federelement 823 die Andruckkraft zwischen den Reibflächen 831 und 841 erhöht wird. Dadurch kann ebenfalls die lenkwinkelunabhängige Dämpfung eingestellt werden. Der Vorteil dieser Anordung ist die kompakte Bauweise mit wenigen beweglichen Bauteilen, die robust ist und zudem eine sehr schnelle Einkopplung der Dämpfung ermöglicht.

Die in Figuren 4 und 5 gezeigten Ausführungsformen weisen eine Störgrößen-Simulationseinrichtung 9, die als Stellantrieb 91 einen Stellmotor umfasst, der über ein Getriebe, im gezeigten Beispiel einen Zahnriementrieb 92, zur Übertragung eines Stellmoments mit der Lenkwelle 51 gekoppelt ist. Durch eine entsprechende Ansteuerung kann von dem Stellantrieb 91 dem durch die Federelemente 79 erzeugten, lenkwinkelabhängigen Rückstellmoment, und gegebenenfalls einem von einer Dämpfungseinrichtung 8 erzeugten, lenkwinkelunabhängigen Dämpfungsmoment ein zusätzliches Drehmoment als Störmoment überlagert werden. Das Störmoment kann beispielsweise durch Fahrbahnunebenheiten hervorgerufene Vibrationen oder Auslenkungen der gelenkten Räder 46 über die Lenkwelle 51 an das Lenkrad 52 zurückmelden, abhängig von realen Messwerten in einer steer-by-wire-Lenkung. Es ist weiterhin möglich, Störmomente als Vibration oder Ruckeln in die Lenksäule 1 einzukoppeln, um dem Fahrer über das Lenkrad 52 ein haptisches Signal zu vermitteln, beispielsweise zur Warnung, wenn von einem Sensor erfasst wird, dass eine Fahrbahnbegrenzung oder -markierung überfahren worden ist, sich ein Hindernis im Fahrweg befindet, über den Verkehrsfunk eine Warnmeldung erfolgt, eine Übermüdung des Fahrers festgestellt wird oder dergleichen.

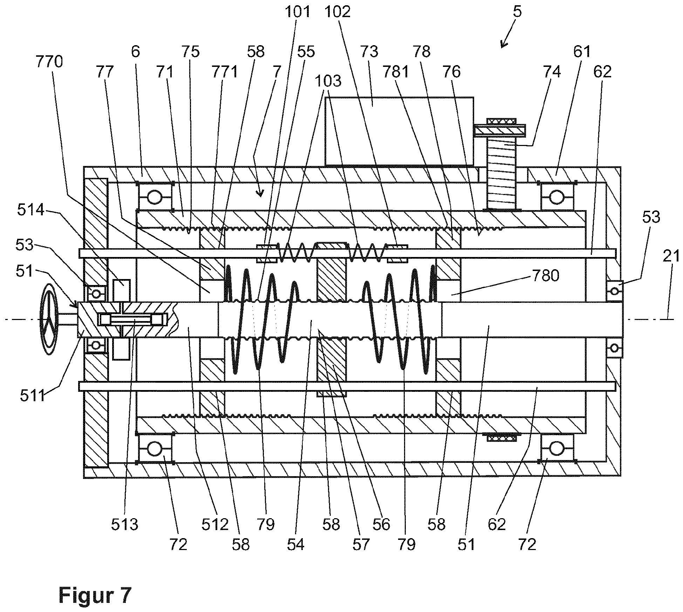

In der Figur 7 ist eine weitere Ausführung ähnlich der Figur 2 dargestellt, wobei die zwischen dem Übertragungselement 56 und den Widerlagern 77 und 78 angeordnete Federelemente 79 vollständig entspannt sind und diese einen axialen Abstand zu dem Übertragungselement 56 aufweisen können. Jedes der jeweiligen Federelemente 79 ist an dem jeweiligen Widerlager 77 oder 78 fixiert, so dass das jeweilige Federelement 79 im vollständig entspannten Zustand daran gehalten ist. Die beiden Federelemente 79 sind als koaxial um die Lenkwelle 51 angeordnete kegelförmige Schraubenfedern ausgebildet, vorzugsweise mit einer nichtlinearen degressiven Kennlinie. Zwischen dem Übertragungselement 56 und den Widerlagern 77 und 78 ist jeweils eine Hülse 101 und 102 koaxial auf dem Führungsprofil 62 angeordnet. Die Hülsen 101 und 102 sind unverschiebbar auf dem Führungsprofil 62 fixiert, beispielsweise durch verstemmen, kleben oder löten. Zwischen der Hülse 101 und dem Übertragungselement 56 und der Hülse 102 und dem Übertragungselement 56 befindet sich eine jeweilige Spielausgleichsfeder 103.

In der dargestellten Mittelstellung, in der sich das Übertragungselement 56 axial in der Mitte zwischen den Widerlagern 77 und 78 und den Hülsen 101 und 102 befindet, kontaktieren die Spielausgleichsfedern 103 jeweils das Übertragungselement 56 und eine der Hülsen 101 und 102. Wird aus dieser Mittelstellung, die der Geradeausstellung der gelenkten Räder 46 entspricht, die Lenkwelle 51 durch Betätigung des Lenkrads 52 verdreht, wird das Übertragungselement 56 auf dem Außengewinde 55 des Gewindeabschnitts 54 parallel zur Längsachse 21 translatorisch bewegt, und zwar abhängig von der Drehrichtung des Lenkeinschlags axial in Richtung auf das eine Widerlager 77 oder das andere Widerlager 78 zu. Dabei wird zunächst einer der Spielausgleichsfeder 103 entspannt und die andere Spielausgleichsfeder 103 weiter vorgespannt. Nach einer gewissen Verlagerung des Übertragungselements 56 tritt dieses in Kontakt mit dem Federelement 79, auf das sich das Übertragungselement 56 zubewegt. Bei einer weiteren Verlagerung des Übertragungslements 56 wird das Federelement 79, welches mit dem Übertragungselement 56 in Kontakt steht, komprimiert und vorgespannt bis hin zu einer Stellung, in der die eine der Spielausgleichsfedern 103 auf Block geht. Diese Stellung entspricht dem vollen Lenkeinschlag. Das Federelement 79, das mit dem Übertragungselement 56 in Kontakt steht, und die Spielausgleichsfedern 103 bewirken eine Rückstellung des Übertragungslements 56 in Richtung der Mittelstellung. Ist das Federelement 79 vollständig entlastet, bewirkt nur noch die Spielausgleichsfeder 103 die vollständige Rückstellung in die Mittelstellung, bei der die beiden Spielausgleichsfedern 103 im Gleichgewicht stehen.

Die Spielausgleichsfedern 103 dienen zur Reduktion des Lenkspiels in der Mittelstellung. Weiterhin kann dadurch die Kombination der Spielausgleichsfeder 103 und der jeweiligen Hülse 101 oder 102 ein Endanschlag, der dem vollen Lenkeinschlag entspricht, realisiert werden. Die Federelemente 79 dienen, wie bereits in den anderen Ausführungen dargestellt, der Anpassung der Rückstellbewegung in die Mittelstellung. Mittels der durch den Stellantrieb 7 verstellbaren Widerlager 77 und 78 lassen sich die Federelemente 79 in ihrer jeweiligen Position zum Übertragungselement 56 antiparallel verlagern. Die Hülsen 101 und 102 begrenzen dabei die Verlagerung des jeweiligen Widerlagers 77 und 78 in Richtung des Übertragungselement 56.

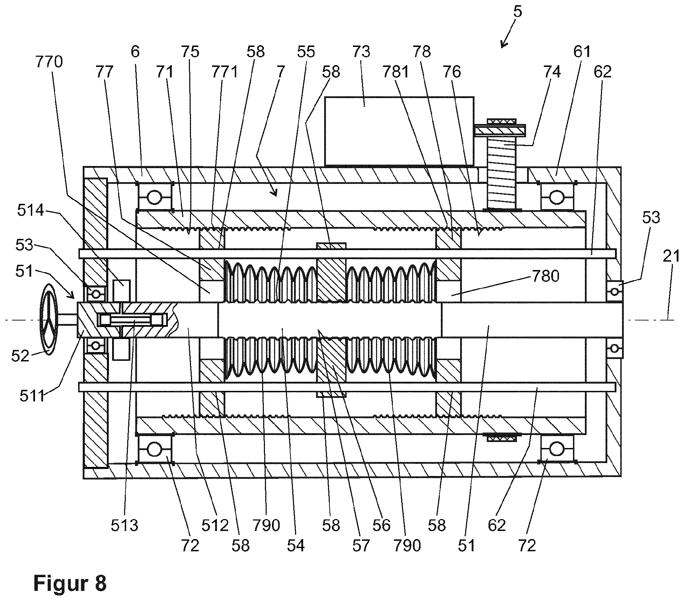

Der in der Figur 8 dargestellte Feedback-Aktuator 5 ist ähnliche dem Feedback-Aktuator gemäß der Figur 2 aufgebaut, jedoch sind die Federelemente jeweils als Faltenbalg 790 ausgebildet, wobei der Faltenbalg 790 eine nicht-lineare Federcharakteristik aufweisen kann und somit ähnlich wirkt wie ein Tellerfederpaket. Dieser Faltenbalg 790 umfasst einen Elastomerwerkstoff, wobei dieser in einer vorteilhaften Weiterbildung ein Drahtgeflecht als Einleger aufweist. Solche gattungsgemäßen Faltenbalge 790 sind dem Fachmann für Kraftfahrzeuglenkungen aus dem Stand der Technik hinreichend bekannt und benötigen deshalb keiner genaueren Beschreibung. Bevorzugt weist der Faltenbalg 790 ausgehend von der entspannten Stellung, auch Neutralstelllung genannt, in dem der Faltenbalg vorspannungsfrei ist, eine in Zugrichtung steifere Federcharakteristik auf als in Druckrichtung.

**Bezugszeichenliste**

| | | | |
|---|---|---|---|
| 1 | Lenksystem | 75 | erster Innengewindeabschnitt |
| 2 | Eingabeeinheit | 76 | zweiter Innengewindeabschnitt |
| 21 | Längsachse | 77 | Widerlager |
| 3 | Leitung | 770,780 | Öffnungen |
| 4 | Lenkungsantrieb | 771 | Außengewinde |
| 41 | Stellmotor | 78 | Widerlager |
| 42 | Lenkgetriebe | 781 | Außengewinde |
| 43 | Ritzel | 79 | Federelement |
| 44 | Zahnstange | 790 | Faltenbalg |
| 45 | Spurstange | 8 | Dämpfungseinrichtung |
| 46 | Rad | 81 | Rotor |
| 5 | Feedback-Aktuator | 82 | Stator |
| 51 | Lenkwelle | 821 | Außengewinde |
| 511 | Eingangswelle | 822 | Andruckplatte |
| 512 | Ausgangswelle | 823 | Federelement |
| 513 | Drehstab | 83, 831 | Reibfläche |
| 514 | Sensor | 84, 841 | Reibfläche |
| 52 | Lenkrad | 85 | Spalt |
| 53 | Lager | 86 | Gehäuse |
| 54 | Gewindeabschnitt | 860 | Führungselemente |
| 55 | Außengewinde | 87 | Stellmotor |
| 56 | Übertragungselement | 871 | Magnetspule |
| 57 | Innengewinde | 88 | Zahnriemen |
| 58 | Durchgangsöffnungen | 89 | Stellmutter |
| 6 | Führungseinrichtung | 891 | Innengewinde |
| 61 | Mantelgehäuse | 9 | Störgrößen-Simulationseinrichtung |
| 62 | Führungsprofil | 91 | Stellantrieb |
| 7 | Verstelleinrichtung | 92 | Zahnriementrieb |
| 71 | Stellgehäuse | 101 | Hülse |
| 72 | Lager | 102 | Hülse |
| 73 | Stellantrieb | 103 | Spielausgleichsfed |
| 74 | Übertragungsglied | | |

## Patentansprüche

1. Feedback-Aktuator (5) für eine Lenkeinrichtung (1), umfassend eine Lenkwelle (51), die um ihre Längsachse (21) drehbar relativ zu einer Führungseinrichtung (6) gelagert ist und die über einen Gewindetrieb (54, 57) mit einem Übertragungselement (56) gekoppelt ist, welches an der Führungseinrichtung (6) relativ zur Drehung der Lenkwelle (51) feststehend angebracht ist und durch Drehung der Lenkwelle (51) axial bezüglich der Längsachse (21) translatorisch bewegbar ist, wobei das Übertragungselement (56) in axialer Richtung zwischen zwei an der Führungseinrichtung (6) abgestützten axialen Widerlagern (77, 78) angeordnet ist und zwischen dem Übertragungselement (56) und den Widerlagern (77, 78) jeweils ein Federelement (79, 790) angeordnet ist,
**dadurch gekennzeichnet,**
**dass** jedes der beiden Federelemente (79,790) mit dem Übertragungselement (56) und einem der Widerlager (77, 78) verbunden ist.

2. Feedback-Aktuator nach Anspruch 1, **dadurch gekennzeichnet, dass** beide Federelemente (79, 790) zwischen dem Übertragungselement (56) und den Widerlagern (77, 78) unter axialer Federvorspannung stehen.

3. Feedback-Aktuator nach einem der vorangehenden Ansprüche, **dadurch gekennzeichnet, dass** die Federelemente (79, 790) eine nichtlineare Federcharakteristik haben

4. Feedback-Aktuator nach einem der vorangehenden Ansprüche, **dadurch gekennzeichnet, dass** zumindest ein Widerlager (77, 78) mit einer Verstelleinrichtung (7) verbunden ist und relativ zur Führungseinrichtung (6) axial verstellbar ist.

5. Feedback-Aktuator nach Anspruch 3, **dadurch gekennzeichnet, dass** beide Widerlager (77, 78) von der Verstelleinrichtung (7) synchron antiparallel zueinander axial bewegbar sind.

6. Feedback-Aktuator nach Anspruch 3, **dadurch gekennzeichnet, dass** die Verstelleinrichtung (7) einen motorischen Stellantrieb (73) aufweist, der zur axialen Verstellung mit mindestens einem Widerlager (77, 78) gekoppelt ist.

7. Feedback-Aktuator nach Anspruch 3, **dadurch gekennzeichnet, dass** die Verstelleinrichtung (7) ein rohrförmiges Stellgehäuse (71) umfasst, welches relativ zur Führungseinrichtung (6) um die Längsachse (21) drehbar gelagert ist und ein Innengewinde (75, 76) aufweist, in welches mindestens ein Widerlager (77, 78) mit einem Außengewinde (771, 781) eingeschraubt ist.

8. Feedback-Aktuator nach Anspruch 7, **dadurch gekennzeichnet, dass** das rohrförmige Stellgehäuse (71) zwei Innengewindeabschnitte (75, 76) mit gegenläufigen Gewinden hat, und die beiden Widerlager (77, 78) korrespondierende gegenläufige Außengewinde (771, 781) haben.

9. Feedback-Aktuator nach einem der vorangehenden Ansprüche, **dadurch gekennzeichnet, dass** die Führungseinrichtung (6) ein Mantelgehäuse (61) umfasst, in dem die Lenkwelle (51) drehbar gelagert ist

10. Feedback-Aktuator nach einem der vorangehenden Ansprüche, **dadurch gekennzeichnet, dass** die Lenkwelle (51) mit einem Rotor (81) einer Dämpfungseinrichtung (8) gekoppelt ist, die einen an der Führungseinrichtung (6) abgestützten Stator (82) aufweist, wobei zwischen Rotor (81) und Stator (82) ein Dämpfungsmoment einkoppelbar ist, welches einem in die Lenkwelle (51) eingeleiteten Lenkmoment entgegengesetzt ist.

11. Feedback-Aktuator nach Anspruch 10, **dadurch gekennzeichnet, dass** der Rotor (81) und der Stator (82) einander zugewandte Reibelemente (83, 84) aufweisen, die in Reibschluss bringbar sind.

12. Feedback-Aktuator nach Anspruch 10, **dadurch gekennzeichnet, dass** die Dämpfungseinrichtung (8) eine Einstelleinrichtung (87, 871) zur Einstellung des Dämpfungsmoments aufweist.

13. Feedback-Aktuator nach Anspruch 12, **dadurch gekennzeichnet, dass** die Einstelleinrichtung einen Stellantrieb (87, 871) aufweist, der mit dem Rotor (81) oder dem Stator (82) zusammenwirkt zur relativen Positionierung und/oder Einstellung einer vorgegebenen Andruckkraft.

14. Feedback-Aktuator nach einem der vorangehenden Ansprüche, **dadurch gekennzeichnet, dass** ein Stellantrieb (91) einer Störgrößen-Simulationseinrichtung (9) mit der Lenkwelle (51) koppelbar ist.

## Claims

1. Feedback actuator (5) for a steering device (1), comprising a steering shaft (51) which is mounted so as to be rotatable, about its longitudinal axis (21), relative to a guide device (6) and which is coupled by means of a screw drive (54, 57) to a transmission element (56) which is attached to the guide device (6) fixedly relative to the rotation of the steering shaft (51) and which, by rotation of the steering shaft (51), is movable in translation axially relative to the longitudinal axis (21), wherein the transmission element (56) is arranged in an axial direction between two axial counterbearings (77, 78) supported on the guide device (6), and in each case one spring element (79, 790) is arranged between the transmission element (56) and the counterbearings (77, 78),
**characterized**
**in that** each of the two spring elements (79, 790) is connected to the transmission element (56) and to one of the counterbearings (77, 78).

2. Feedback actuator according to Claim 1, **characterized in that** the two spring elements (79, 790) between the transmission element (56) and the counterbearings (77, 78) are under axial spring preload.

3. Feedback actuator according to any of the preceding claims, **characterized in that** the spring elements (79, 790) comprise a non-linear spring characteristic.

4. Feedback actuator according to any of the preceding claims, **characterized in that** at least one counterbearing (77, 78) is connected to an adjustment device (7) and is axially adjustable relative to the guide device (6).

5. Feedback actuator according to Claim 3, **characterized in that** the two counterbearings (77, 78) are axially movable synchronously and antiparallel with respect to one another by the adjustment device (7).

6. Feedback actuator according to Claim 3, **characterized in that** the adjustment device (7) comprises a motor actuating drive (73) which, for the axial adjustment, is coupled to at least one counterbearing (77, 78).

7. Feedback actuator according to Claim 3, **characterized in that** the adjustment device (7) comprises a tubular actuation housing (71) which is mounted so as to be rotatable, about the longitudinal axis (21), relative to the guide device (6) and which comprises an internal thread (75, 76) into which at least one counterbearing (77, 78) is screwed by way of an external thread (771, 781).

8. Feedback actuator according to Claim 7, **characterized in that** the tubular actuation housing (71) comprises two internal thread portions (75, 76) with opposite threads, and the two counterbearings (77, 78) comprise corresponding opposite external threads (771, 781) .

9. Feedback actuator according to any of the preceding claims, **characterized in that** the guide device (6) comprises a casing housing (61) in which the steering shaft (51) is rotatably mounted.

10. Feedback actuator according to any of the preceding claims, **characterized in that** the steering shaft (51) is coupled to a rotor (81) of a damping device (8) which comprises a stator (82) supported on the guide device (6), wherein a damping torque can be coupled in between rotor (81) and stator (82), which damping torque opposes a steering torque introduced into the steering shaft (51).

11. Feedback actuator according to Claim 10, **characterized in that** the rotor (81) and the stator (82) comprise friction elements (83, 84) facing toward one another, which friction elements can be placed in frictional engagement.

12. Feedback actuator according to Claim 10, **characterized in that** the damping device (8) comprises an adjusting device (87, 871) for adjusting the damping torque.

13. Feedback actuator according to Claim 12, **characterized in that** the adjusting device comprises an actuating drive (87, 871) which interacts with the rotor (81) or the stator (82) for the relative positioning and/or adjustment of a predefined pressing force.

14. Feedback actuator according to any of the preceding claims, **characterized in that** an actuating drive (91) of a disturbance variable simulation device (9) is couplable to the steering shaft (51).

## Revendications

1. Actionneur à rétroaction (5) pour un dispositif de direction (1), comportant un arbre de direction (51) qui est monté de manière rotative autour de son axe longitudinal (21) par rapport à un dispositif de guidage (6) et qui est accouplé à un élément de transmission (56) par le biais d'une vis d'entraînement (54, 57), lequel élément de transmission est installé de manière fixe sur le dispositif de guidage (6) par rapport à la rotation de l'arbre de direction (51) et est mobile en translation axialement par rapport à l'axe longitudinal (21) par rotation de l'arbre de direction (51), l'élément de transmission (56) étant disposé dans la direction axiale entre deux butées axiales (77, 78) supportées sur le dispositif de guidage (6), et un élément ressort (79, 790) étant respectivement disposé entre l'élément de transmission (56) et les butées (77, 78),
**caractérisé en ce que**
chacun des deux éléments ressorts (79, 790) est relié à l'élément de transmission (56) et à l'une des butées (77, 78).

2. Actionneur à rétroaction selon la revendication 1, **caractérisé en ce que** les deux éléments ressorts (79, 790) sont sous précontrainte élastique axiale entre l'élément de transmission (56) et les butées (77, 78).

3. Actionneur à rétroaction selon l'une des revendications précédentes, **caractérisé en ce que** les éléments ressorts (79, 790) ont une caractéristique de ressort non linéaire.

4. Actionneur à rétroaction selon l'une des revendications précédentes, **caractérisé en ce qu'**au moins une butée (77, 78) est reliée à un dispositif de réglage (7) et est réglable axialement par rapport au dispositif de guidage (6) .

5. Actionneur à rétroaction selon la revendication 3, **caractérisé en ce que** les deux butées (77, 78) sont déplaçables axialement par le dispositif de réglage (7) de manière antiparallèle et synchrone l'une par rapport à l'autre.

6. Actionneur à rétroaction selon la revendication 3, **caractérisé en ce que** le dispositif de réglage (7) comprend un mécanisme de commande motorisé (73), lequel est accouplé à au moins une butée (77, 78) pour le réglage axial.

7. Actionneur à rétroaction selon la revendication 3, **caractérisé en ce que** le dispositif de réglage (7) comporte un boîtier de réglage tubulaire (71), lequel est monté de manière rotative autour de l'axe longitudinal (21) par rapport au dispositif de guidage (6) et comprend un filetage intérieur (75, 76) dans lequel est vissée au moins une butée (77, 78) dotée d'un filetage extérieur (771, 781).

8. Actionneur à rétroaction selon la revendication 7, **caractérisé en ce que** le boîtier de réglage tubulaire (71) a deux parties de filetage intérieur (75, 76) dotées de filetages en sens contraires, et les deux butées (77, 78) ont des filetages extérieurs (771, 781) en sens contraires correspondants.

9. Actionneur à rétroaction selon l'une des revendications précédentes, **caractérisé en ce que** le dispositif de guidage (6) comporte un boîtier enveloppant (61) dans lequel l'arbre de direction (51) est monté de manière rotative.

10. Actionneur à rétroaction selon l'une des revendications précédentes, **caractérisé en ce que** l'arbre de direction (51) est accouplé à un rotor (81) d'un dispositif d'amortissement (8) qui comprend un stator (82) supporté sur le dispositif de guidage (6), un couple d'amortissement pouvant être injecté entre le rotor (81) et le stator (82), lequel couple d'amortissement est opposé à un couple de braquage introduit dans l'arbre de direction (51).

11. Actionneur à rétroaction selon la revendication 10, **caractérisé en ce que** le rotor (81) et le stator (82) comprennent des éléments de friction (83, 84) tournés l'un vers l'autre, lesquels peuvent être amenés en engagement par friction.

12. Actionneur à rétroaction selon la revendication 10, **caractérisé en ce que** le dispositif d'amortissement (8) comprend un dispositif de réglage (87, 871) pour le réglage du couple d'amortissement.

13. Actionneur à rétroaction selon la revendication 12, **caractérisé en ce que** le dispositif de réglage comprend un mécanisme de commande (87, 871) qui coopère avec le rotor (81) ou le stator (82) pour le positionnement relatif et/ou le réglage d'une force de pression prédéfinie.

14. Actionneur à rétroaction selon l'une des revendications précédentes, **caractérisé en ce qu'**un mécanisme de commande (91) d'un dispositif de simulation de grandeurs perturbatrices (9) peut être accouplé à l'arbre de direction (51).
